## Europäisches Patentamt
## European Patent Office
## Office européen des brevets

(19)

(11) Veröffentlichungsnummer: **0 117 973**
**A2**

(12) # EUROPÄISCHE PATENTANMELDUNG

(21) Anmeldenummer: **84100162.1**

(22) Anmeldetag: **09.01.84**

(51) Int. Cl.³: **B 23 Q 37/00**

(30) Priorität: **10.01.83 DE 3300553**

(43) Veröffentlichungstag der Anmeldung:
**12.09.84 Patentblatt 84/37**

(84) Benannte Vertragsstaaten:
**AT BE CH DE FR GB IT LI LU NL SE**

(71) Anmelder: **Maier & Co.**
**Friedrich-Maier-Strasse 9**
**A-5400 Hallein(AT)**

(72) Erfinder: **Vesely, Gottfried, Dipl.-Ing.**
**Oberfeldstrasse 16**
**A-5082 Groedig(AT)**

(74) Vertreter: **Schaumburg, Schulz-Dörlam & Thoenes**
**Mauerkircherstrasse 31 Postfach 86 07 48**
**D-8000 München 86(DE)**

(54) **Bausatz für Kleinwerkzeugmaschinen.**

(57) Bei einem Bausatz für Kleinwerkzeugmaschinen sind ein Antriebsmotor (32), ein Spindelstock (48) und ein Trägerelement (10) vorgesehen, die als selbständige Teile ausgebildet sind. Die miteinander verbindbaren Teile des Bausatzes weisen jeweils eine Anlagefläche auf, in der mindestens eine hinterschnittene Klemmnut (18) ausgebildet ist. In die Klemmnuten (18) zweier miteinander zu verbindender Bausatzteile sind Verbindungselemente (86) einführbar, die mittels mitndestens eines Spannelementes (98) in den Klemmnuten (18) festklemmbar sind.

EP 0 117 973 A2

./...

Fig. 18

Bausatz für Kleinwerkzeugmaschinen
_____

Die Erfindung betrifft einen Bausatz für Kleinwerkzeugmaschinen mit mindestens einem Antriebsmotor,
einem Spindelstock und einem Trägerelement zur Halterung dieser Teile.

Es sind einerseits große Werkzeugmaschinen zur Verwendung in Werkstätten und Fabriken bekannt, die
durch das Hinzufügen, Wegnehmen und Umsetzen von
Teilen in gewissen Umfange variiert werden können,
um so die Durchführung unterschiedlicher Arbeitsgänge unter Verwendung derselben Grundelemente zu
ermöglichen. Von solchen Maschinen wird eine hohe
Präzision verlangt und sie müssen strengen Sicherheitsanforderungen genügen. Dies läßt einen Umbau
der Werkzeugmaschine in der Regel nur in einem
sehr engen Rahmen zu, wobei häufig komplizierte Zusatzteile verwendet werden müssen und der Umbau einen
erheblichen Zeitaufwand erfordert.

Ferner sind insbesondere für den Heimwerkerbereich
Bausätze für Kleinwerkzeugmaschinen bekannt, deren
Grundelement meist eine Handbohrmaschine ist, die
jeweils mit einer gewissen Zahl von Zusatzeinrichtungen zu einer Werkzeugmaschine kombinierbar ist.
Nachteilig an diesen Bausätzen ist, daß mit Ausnahme
der Handbohrmaschine alle Zusatzeinrichtungen immer
nur für einen bestimmten Werkzeugmaschinentyp zu gebrauchen sind. Um einen Bausatz zu erhalten, mit dem
eine Vielzahl von Arbeitsgängen durchführbar wäre,
benötigt man eine große Anzahl von Zusatzeinrichtungen, so daß das ganze System sehr aufwendig und

teuer wird.

Der Erfindung liegt die Aufgabe zugrunde, bei einem Bausatz der eingangs genannten Art eine Möglichkeit anzugeben, wie verschiedene Grundelemente untereinander kombinierbar sind, so daß mit einer geringen Anzahl dieser Grundelemente und gegebenenfalls einer begrenzten Anzahl von Zusatzelementen mit geringem Zeitaufwand Kleinwerkzeugmaschinen zusammengesetzt werden können, die hinsichtlich ihrer Leistung den Ansprüchen von Bastlern und Modellbauern genügen.

Diese Aufgabe wird erfindungsgemäß dadurch gelöst, daß der Antriebsmotor, der Spindelstock und das Trägerelement als selbständige Teile ausgebildet sind, daß die miteinander verbindbaren Teile des Bausatzes jeweils mindestens eine Anlagefläche aufweisen, in der mindestens eine hinterschnittene Klemmnut ausgebildet ist und daß in die Klemmnuten zweier miteinander zu verbindender Bausatzteile einführbare Verbindungselemente vorgesehen sind, die mittels mindestens eines Spannelementes in den Klemmnuten festklemmbar sind.

Wie aus der weiter unten folgenden Beschreibung von Ausführungsbeispielen noch deutlicher wird, ermöglicht die Trennung von Motor, Spindelstock und Trägerelement einerseits sowie die erfindungsgemäß vorgeschlagene Art der Verbindung dieser und weiterer Bausatzteile andererseits eine Vielzahl von Maschinenvarianten, die mit geringstem Zeitaufwand und einer geringen Anzahl unterschiedlicher Teile aufbaubar sind. Zur Verbindung zweier Teile genügt es, sie mit ihren Klemmnuten aneinander zu legen, so daß ein Verbindungselement in beide Klemmnuten gleichzeitig eingeschoben und mit Hilfe des Spannelementes in den beiden Klemmnuten verklemmt werden kann. Das Verbindungselement kann dabei an einer beliebigen Stelle der Klemmnuten festgelegt werden.

Vorzugsweise bestehen die Verbindungselemente jeweils aus zwei miteinander verbundenen Einzelprofilen, deren Querschnitt jeweils dem Querschnitt einer Klemmnut entspricht. Auf diese Weise wird eine formschlüssige Verbindung zwischen zwei miteinander zu verbindenden Teilen erreicht. Die Einzelprofile können parallel zueinander gerichtet sein oder auch einen Winkel miteinander bilden. Im ersteren Fall werden die beiden Bausatzteile durch das Verbindungselement so miteinander zusammengespannnt, daß ihre Klemmnuten parallel zueinander gerichtet sind. Im zweiten Fall kann durch das Verbindungselement auch eine Verbindung zwischen zwei Bausatzteilen hergestellt werden, deren Klemmnuten sich unter dem durch das Verbindungselement vorgegebenen Winkel kreuzen. Um zwei Bausatzteile so miteinander verbinden zu können, daß sich ihre Klemmnunten unter einem beliebigen Winkel kreuzen, kann eines der Einzelprofile des Verbindungselementes bezüglich einer zur gedachten Trennebene zwischen den beiden Einzelprofilen senkrechten Achse rotationssymmetrisch ausgebildet sein. Das Verbindungselement läßt sich somit in einer der Klemmnuten beliebig drehen, während es in der anderen Klemmnut nur in Nutlängsrichtung verschoben werden kann.

Ein Verklemmen der Verbindungselemente an einer beliebigen Stelle der Klemmnuten läßt sich auf einfache Weise dadurch erreichen, daß die Verbindungselemente jeweils mindestens zwei Abschnitte umfassen, die mittels des Spannelementes um eine senkrecht zur Profil- bzw. Nutlängsrichtung relativ zueinander verschwenkbar sind. Durch das Verschwenken verkanten sich die Abschnitte in der Nut und spannen auf diese Weise die miteinander zu verbindenden Bausatzteile gegeneinander. Bei einer sehr einfachen und preiswert herzustellenden Ausführungsform sind die Verbindungselemente einstückig aus Kunststoff hergestellt, wobei eine Materialbrücke zwischen den beiden Abschnitten mit gegenüber diesen geringerer Stärke ein Gelenk zwischen den beiden Abschnitten bildet. Um das Verbindungselement an einer beliebigen Stelle der Klemmnuten festlegen zu können, muß das Spannelement von der Nut aus betätigbar sein. Auf einfache Weise ist dies möglich, wenn das Spannelement von einer in Profil- oder Nutlängsrichtung verstellbaren Schraube gebildet ist. Die Schraube kann dabei beispielsweise in einen Abschnitt des Verbindungselementes eingeschraubt sein und sich an dem gelenkig mit diesem Abschnitt zusammenhängenden zweiten Abschnitt des Verbindungselementes abstützen, so daß die beiden Abschnitte des Verbindungselementes durch die Schraube auseinander gespreizt werden können, wobei sie sich in den Klemmnuten verkanten. Es ist jedoch auch ebenso möglich, die gelenkig miteinander zusammenhängenden und einen Abstand voneinander aufweisenden Abschnitte des Verbindungselementes mittels der Schraube und einer Mutter zusammenzuspannen, wobei sie sich ebenfalls in den Klemmnuten verkanten. In beiden Fällen kann die Schraube mit einem in die Nuten eingeführten Schraubendreher betätigt werden. Es brauchen keine eigenen Öffnungen zur Betätigung des Spannelementes in den miteinander zu verbindenden Bausatzteilen vorgesehen sein, die vor allem den Nachteil hätten, daß das Verbindungselement nur an einer diesen Öffnungen entsprechenden Stelle festgeklemmt werden könnte.

Gemäß einer anderen Ausführungsform der Erfindung besteht das Verbindungselement aus einem elastischen Material, wobei seine Querschnittsfläche durch das Spannelement reversibel veränderlich ist. Auch in diesem Falle könnte das Spannelement beispielsweise von einer Schraube und einer Mutter gebildet sein, zwischen denen das Verbindungselement unter Verformung seiner Querschnittsfläche einspannbar ist.

Vorzugsweise weisen die Klemmnuten ein T-Profil und die Verbindungselemente ein Doppel-T-Profil auf. Dieses T-Profil ist einfach zu fertigen und bietet auch bei aus Kunststoff bestehenden Verbindungselementen ein hohes Maß an Sicherheit gegen ein Ausbrechen dieser Elemente aus der Nut. Prinzipiell können aber auch andere Profilformen für die hinterschnittenen Klemmnuten und die Verbindungselemente gewählt werden wie beispielsweise ein Schwalbenschwanzprofil.

Um die Spindeldrehzahl dem jeweiligen Arbeitszweck anpassen zu können, kann der Bausatz mindestens einen Getriebeblock umfassen, der einerseits mit dem Antriebsmotor und andererseits mit dem Spindelstock kuppelbar ist.

Ein Höchstmaß an Kombinationsmöglichkeiten der verschiedenen Teile des Bausatzes ergibt sich dadurch, daß mindestens der Spindelstock, der Getriebeblock und das Trägerelement eine quaderförmige äußere Gestalt aufweist und in den Längen mindestens zweier Quaderkanten übereinstimmen, wobei die Klemmnuten parallel zu den dritten Quaderkanten gerichtet sind. Das Trägerelement kann beispielsweise sowohl als Maschinenbett wie auch als Ständer verwendet werden, wobei an allen mit einer Klemmnut versehenen Flächen der Antriebsmotor, der Spindelstock oder der Getriebeblock sowie weitere Teile des Bausatzes befestigt werden können. Die Übereinstimmung in mindestens einem Teil der Kantenlängen der Bauelemente gewährleistet, daß diese wie Bauklötze aneinandergesetzt werden können. Gleichzeitig ist sichergestellt, daß die Bausatzteile durch ihre ebenen Außenflächen in jeder Stellung eine flache Auflagefläche besitzen, mit der sie auf einem Arbeitstisch oder einer sonstigen Unterlage sicher aufliegen. Die Symmetrie und damit auch die vielseitige Verwendbarkeit der Bauteile des Bausatzes wird noch dadurch erhöht, daß die Klemmnuten jeweils mittig zwischen den parallel zu ihnen gerichteten Kanten der sie aufnehmenden Flächen verlaufen können.

Bei einer besonders bevorzugten Ausführungsform weisen mindestens der Spindelstock, der Getriebeblock und das Trägerelement senkrecht zu den die Klemmnuten aufweisenden Flächen einen quadratischen Querschnitt auf.

Um beispielsweise ein liegendes Trägerelement mit einem stehenden Trägerelement verbinden zu können, gibt es zum einen die Möglichkeit, in den Trägerelementen Bohrungen vorzusehen, so daß die Teile unter Verwendung von Befestigungsbolzen miteinander verbunden

- 7 -

werden können. In diesem Fall ist jedoch eine Verbindung nur in der durch die Bohrungen vorgegebene Stellung möglich. Eine andere Möglichkeit besteht darin, die beiden Teile durch ein Verbindungselement miteinander zu verbinden, das senkrecht zueinander gerichtete Einzelprofile aufweist, wie dies oben bereits erläutert wurde. Schließlich kann die Verbindung jedoch auch unter Verwendung eines quaderförmigen Zwischenteiles geschehen, das auf mindestens zwei einander entgegengesetzten Flächen jeweils mindestens eine Klemmnut aufweist, wobei eine Klemmnut der einen Fläche senkrecht zu einer Klemmnut der anderen Fläche gerichtet ist. Gleichzeitig kann dieses Zwischenteil auch noch als Werkstückträger dienen und weitere Funktionen erfüllen, die anhand der Beschreibung von Ausführungsbeispielen weiter unten noch näher erläutert werden.

Insbesondere für Dreh- und Fräsarbeiten, jedoch auch für eine Ständerbohrmaschine ist es zweckmäßig, wenn der Bausatz mindestens eine Schlittenanordnung mit einem mindestens annähernd quaderförmigen Schlittenträger und einem auf diesem verschiebbaren Schlitten umfaßt, wobei der Schlittenträger an den zur Bewegungsrichtung des Schlittens parallelen Außenflächen jeweils mindestens eine parallel zur Bewegungsrichtung des Schlittens gerichtete Klemmnut aufweist und wobei in der Oberseite des Schlittens jeweils mindestens eine parallele und eine senkrecht zur Bewegungsrichtung des Schlittens gerichtete Klemmnut ausgebildet ist. Mit Hilfe der Klemmnuten an dem Schlittenträger und am Schlitten können beide Teile jeweils mit anderen Teilen des Bausatzes verbunden werden.

Der Schlitten kann sowohl zur Halterung von Werkstücken als auch von Werkzeugen wie beispielsweise einem Drehstahl dienen. Im Gegensatz zu herkömmlichen Maschinen ist also der Schlitten nicht an dem Maschinenbett geführt, sondern besitzt eine eigene Führung auf einem am Maschinenbett befestigbaren Schlittenträger. Dies erhöht die Variabilität des Bausatzes.

Vorzugsweise ist noch eine weitere Schlittenanordnung mit einem Schlittenträger und einem an diesem verschiebbar geführten Schlitten vorgesehen, wobei der Schlittenträger an seiner Unterseite einen in die Klemmnut einführbaren Nutenstein aufweist, der mittels einer von der Schlittenträgeroberseite her zugänglichen Klemmschraube festklemmbar ist, und wobei der Schlitten auf seiner Oberseite jeweils mindestens eine parallel und eine senkrecht zur Bewegungsrichtung des Schlittens gerichtete Klemmnut aufweist. Die Verwendung eines Nutensteins anstelle einer Klemmnut an der Unterseite des Schlittenträgers hat den Vorteil, daß sich der Schlittenträger flacher bauen läßt und daß der Schlittenträger um die Achse der Befestigungsschraube für den Nutenstein um 360° gedreht werden kann. Damit ist es möglich, den zweiten Schlitten in jeder beliebigen Lage relativ zu dem Bauteil anzuordnen, auf dem er befestigt ist. Dies gibt beispielsweise die Möglichkeit, einen Drehstahl auch schräg zur Drehachse des Werkstückes vorzuschieben. Weitere Möglichkeiten werden noch anhand der Ausführungsbeispiele erläutert.

Die Schlitten der Schlittenanordnungen sind zweckmäßigerweise jeweils über einen handbetätigten Spindeltrieb bewegbar, wie dies an sich bekannt ist. Diese Spindeltriebe erlauben eine genaue Positionierung der Schlitten. Bei dem zweiten Schlitten ist vorzugsweise auch die Möglichkeit vorgesehen, den Spindelantrieb unwirksam zu machen, so daß der Schlitten an dem Schlittenträger beispielsweise mittels eines Stellhebels verstellt werden kann. Diese Lösung kann mit Vorteil an einer Ständerbohrmaschine eingesetzt werden, wobei der Schlittenträger an dem Ständer und der Antriebsmotor zusammen mit dem Spindelstock an dem Schlitten angeordnet sind. Beim Bohren kann dann der Spindelstock, an dessen Spindel das Bohrfutter angeordnet ist, mit dem Stellhebel beim Bohrvorgang zügig abgesenkt werden.

Bei einer bevorzugten Ausführungsform des Spindelstockes ist die Spindel mit einer durchgehenden axialen Bohrung versehen. Dies gibt die Möglichkeit, auch Werkstücke zu drehen, deren axiale Länge größer als die maximale Einspannlänge einer aus dem Bausatz erstellten Drehbank ist. Das Werkstück wird durch die hohle Spindel hindurchgeschoben, so daß der zu bearbeitende Teil zwischen dem Spannfutter und dem Reitstock eingespannt ist, während der nicht zu bearbeitende Abschnitt durch die Spindel nach außen ragt.

Der erfindungsgemäße Bausatz ist insbesondere für Laien wie handwerklich geschickte Jugendliche und Bastler, jedoch auch für Modellbauer geeignet. Die Größe der Bausatzteile und des Antriebsmotors sowie dessen Leistung sind so gewählt, daß insbesondere nicht die Sicherheitsvorschriften eingehalten werden müssen, die an großen Maschinen wegen der damit verbundenen Verletzungsgefahr unbedingt erfüllt werden müssen. Für den erfindungsgemäßen Bausatz genügt beispielsweise ein Elektromotor mit einer Leistung von ca. 20 Watt, der mit Batterien oder über einen Transformator angetrieben werden kann. Ein solcher Motor kann gegebenenfalls mit der Hand angehalten werden, so daß die Verletzungsgefahr mit einer von einem solchen Motor betriebenen Werkzeugmaschine nur gering ist. Auf der anderen Seite ist die Leistung des Motors insbesondere bei Zwischenschaltung eines Getriebes ausreichend, um nicht nur Kunststoff und Holz, sondern auch Metalle wie Aluminium und sogar Stahl bearbeiten zu können. Für den Batteriebetrieb des Antriebsmotors kann in einem der Trägerelemente eine Kammer zur Aufnahme von Batterien vorgesehen sein. Beispielsweise kann das Trägerelement aus einem Hohlprofil bestehen, das an seinen Enden durch Abschlußkappen verschließbar ist und in dem sich mehrere Monozellen wie in einer Stablampe unterbringen lassen.

Weitere Merkmale und Vorteile der Erfindung ergeben sich aus den Unteransprüchen und der folgenden Beschreibung, welche in Verbindung mit den beigefügten Zeichnungen die Erfindung anhand von Ausführungsbeispielen erläutert. Es zeigen:

Fig. 1 bis 6   jeweils in perspektivischer Ansicht ein Trägerelement, ein Zwischenteil, einen Antriebsmotor, einen Spindelstock, einen Getriebeblock und einen Reitstock,

Fig. 7        eine Seitenansicht eines ersten Verbindungselementes,

Fig. 8        eine Endansicht des in Fig. 7 dargestellten Verbindungselementes in
Richtung des Pfeiles P in Fig. 7,

Fig. 9        eine der Fig. 7 entsprechende Ansicht
eines zweiten Verbindungselementes,

Fig. 10       eine Draufsicht auf eine dritte Ausführungsform eines Verbindungselementes,

Fig. 11       eine Seitenansicht des in der Fig. 10
dargestellten Verbindungselementes in
Richtung des Pfeiles Q in Fig. 10,

Fig. 12       eine Seitenansicht eines vierten Verbindungselementes,

Fig. 13       eine Seitenansicht einer erten Schlittenanordnung,

Fig. 14       eine Draufsicht auf die erste Schlittenanordnung,

Fig. 15       eine Endansicht der ersten Schlittenanordnung in Richtung des Pfeiles R

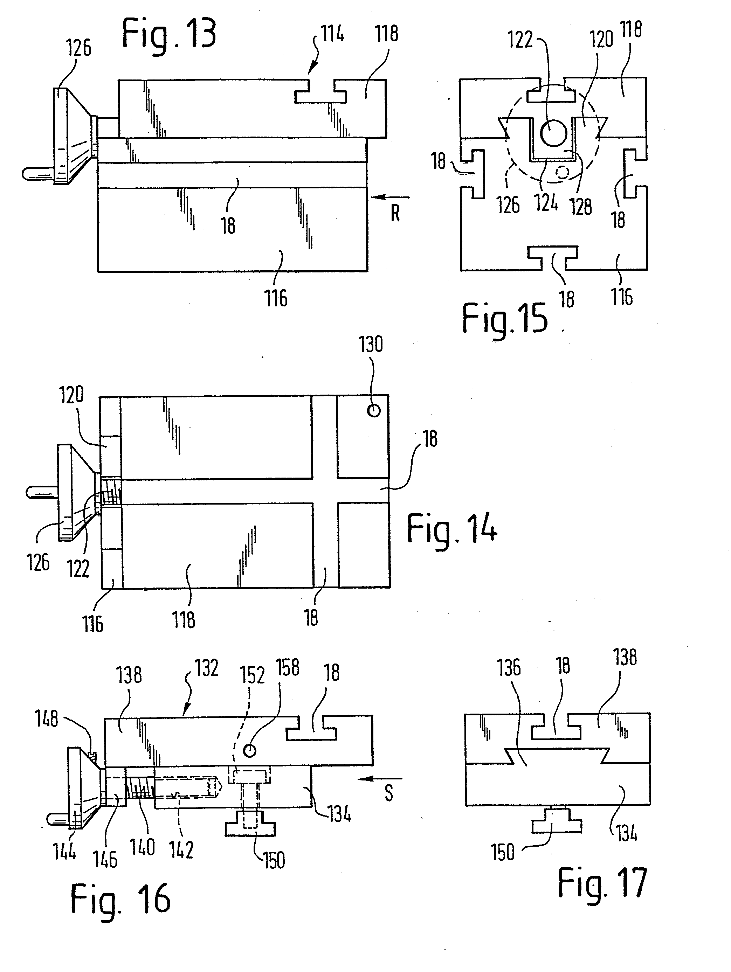

in Fig. 13,

Fig. 16          eine Seitenansicht einer zweiten
                 Schlittenanordnung,

Fig. 17          eine Endansicht der zweiten Schlittenanordnung in Richtung des Pfeiles S
                 in Fig. 16 und

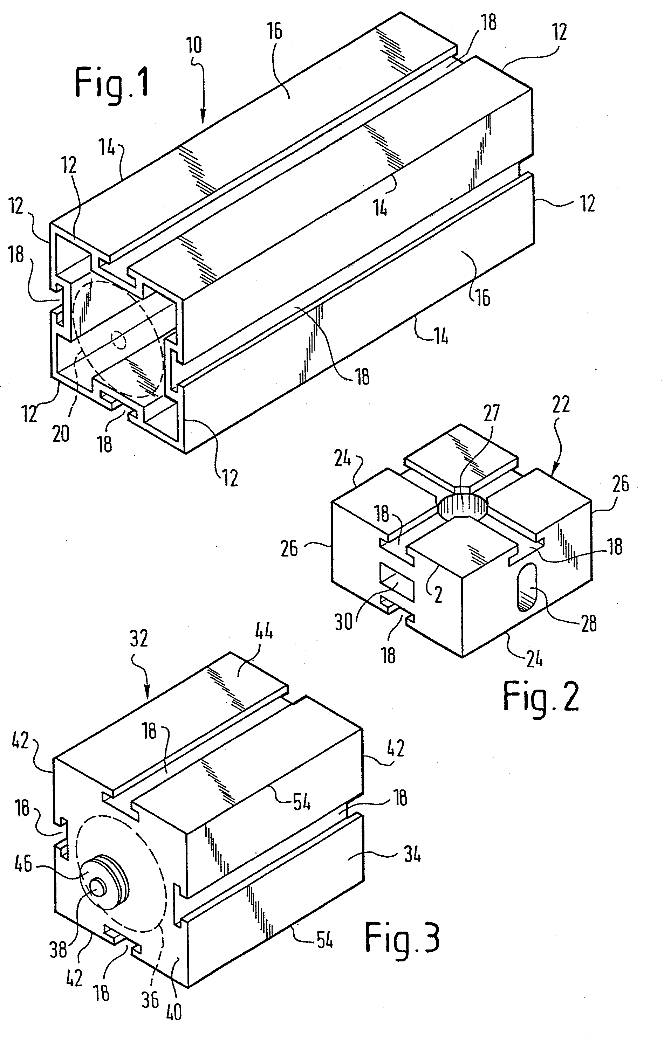

Fig. 18
bis 24           verschiedene Werkzeugmaschinen, die
                 unter Verwendung der in den Fig. 1 bis
                 17 dargestellten Grundelemente des er-
                 findungsgemäßen Bausatzes zusammenge-
                 baut wurden.

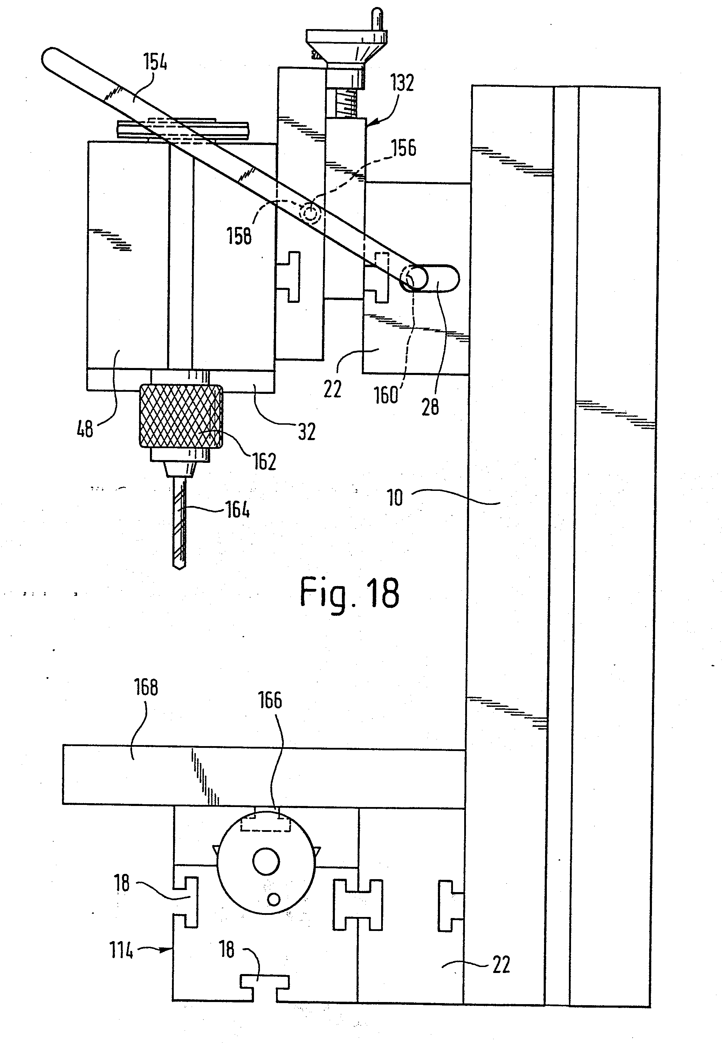

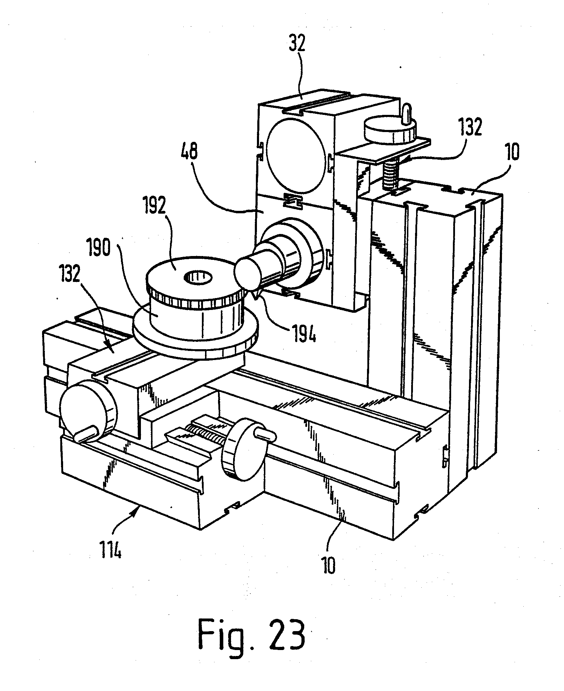

Fig. 1 zeigt ein allgemein mit 10 bezeichnetes quaderförmiges längliches Trägerelement, dessen kurze Kanten 12 gleich lang sind, so daß das Trägerelement 10 einen quadratischen Querschnitt besitzt. Die Längskanten 14 können unterschiedlich lang sein, das heißt, ein Bausatz kann mehrere Trägerelemente unterschiedlicher Länge enthalten. In den längs gerichteten Außenflächen 16 ist jeweils in der Mitte zwischen zwei Längskanten 14 und parallel zu diesen eine Klemmnut 18 mit T-fömigem Querschnitt ausgebildet. Das Trägerelement 10 dient zur Halterung anderer Bausatzteile und kann beispielsweise als Maschinenbett, als Ständer oder als Maschinenfuß Verwendung finden, wie dies später anhand der Figuren 18 bis 24 noch erläutert wird.

Im dargestellten Ausführungsbeispiel besteht das Trägerelement aus einem Hohlprofil, das zur Aufnahme von gestrichelt angedeuteten Monozellen 20 bestimmt ist, die zur Speisung des in der Fig. 3 dargestellten Elektromotors dienen. Das Hohlprofil kann durch nicht dargestellte Kappen verschlossen werden, in denen Stecker oder Buchsen zur Herstellung einer elektrischen Verbindung zwischen den Monozellen 20 und dem Elektromotor angeordnet sind.

Fig. 2 zeigt ein Zwischenteil oder einen Adapter 22 von ebenfalls quaderförmigeer Gestalt, dessen längere Kanten 24 gleiche Länge wie die Kanten 12 des Trägerelementes 10 haben und dessen kurze Kanten 26 im wesentlichen halb so lang wie die Kanten 24 sind. In der in der Fig. 2 nach oben weisenden Fläche des Zwischenteiles 22 sind zwei senkrecht zueinander gerichtete Klemmnuten 18 mit T-förmigem Querschnitt ausgebildet, die jeweils mittig zwischen zwei Kanten 24 und parallel zu diesen angeordnet sind. In der in der Fig. 2 nach unten weisenden Fläche des Zwischenteiles 22 ist ebenfalls eine Klemmnut 18 ausgebildet, die deckungsgleich zu einer der beiden Klemmnuten in der entgegegesetzten Fläche des Zwischenteiles 22 verläuft. Dieses Zwischenteil 22 ermöglicht es, beispielsweise zwei Trägerelemente 10 in einer Stellung senkrecht zueinander miteinander zu verbinden. Im Kreuzungspunkt der beiden Klemmnuten 18 weist das Zwischenteil 22 ferner eine senkrecht zu Ober- und Unterseite verlaufend durchgehende Bohrung 27 auf, durch die gegebenenfalls eine Spindel hindurchgeführt werden kann. An wenigstens einer seiner Flachseiten ist ein Langloch 28 ausgebildet, dessen Funktion später noch erläutert wird. Das Zwischenteil 22 kann an seinen Schmalseiten ebenfalls Klemmnuten aufweisen, so daß es gegebenenfalls auch hochkant mit einem anderen Bausatzteil verbunden werden kann. Schließlich weist das Zwischenteil 22 einen parallel zwischen Ober- und Unterseite verlaufenden durchgehenden Kanal 30 auf, durch den hindurch es mittels eines Nutensteines an einem weiteren Bausatzteil befestigbar ist. Einige Verwendungsmöglichkeiten des Zwischenteiles oder Adapters sind in den anhand der Figuren 18 bis 24 erläuterten Ausführungsbeispielen dargestellt.

Fig. 3 zeigt einen allgemein mit 32 bezeichneten Motorblock mit einem quaderförmigen Gehäuse 34, in dem ein kleiner Elektromotor 36 so angeordnet ist, daß seine Welle 38 senkrecht zu den quadratischen Stirnflächen 40 des Gehäuses 34 gerichtet ist. Die Länge der senkrecht zur Motorwelle 38 verlaufenden Gehäusekanten 42 entspricht wiederum der Länge der Kanten 12 des Trägerelementes 10. In den parallel zur Motorwelle 38 gerichteten Gehäuseflächen 44 sind wiederum Klemmnuten 18 mit T-förmigem Querschnitt ausgebildet in der gleichen Weise, wie dies für das Trägerelement 10 beschrieben wurde.

Auf dem freien Ende der Motorwelle 38 sitzt eine kleine Riemenscheibe oder Schnurrolle 46 zum Antrieb eines nicht dargestellten Treibriemens. Anstelle der Schnurrolle 46 könnte natürlich auch ein Ritzel verwendet werden.

Bei dem Elektromotor 36 handelt es sich um einen kleinen Gleichstrommotor mit einer Leistung von beispielsweise 20 Watt, der von den im Trägerelement 10 angeordneten Batterie oder einem Transformator gespeist wird.

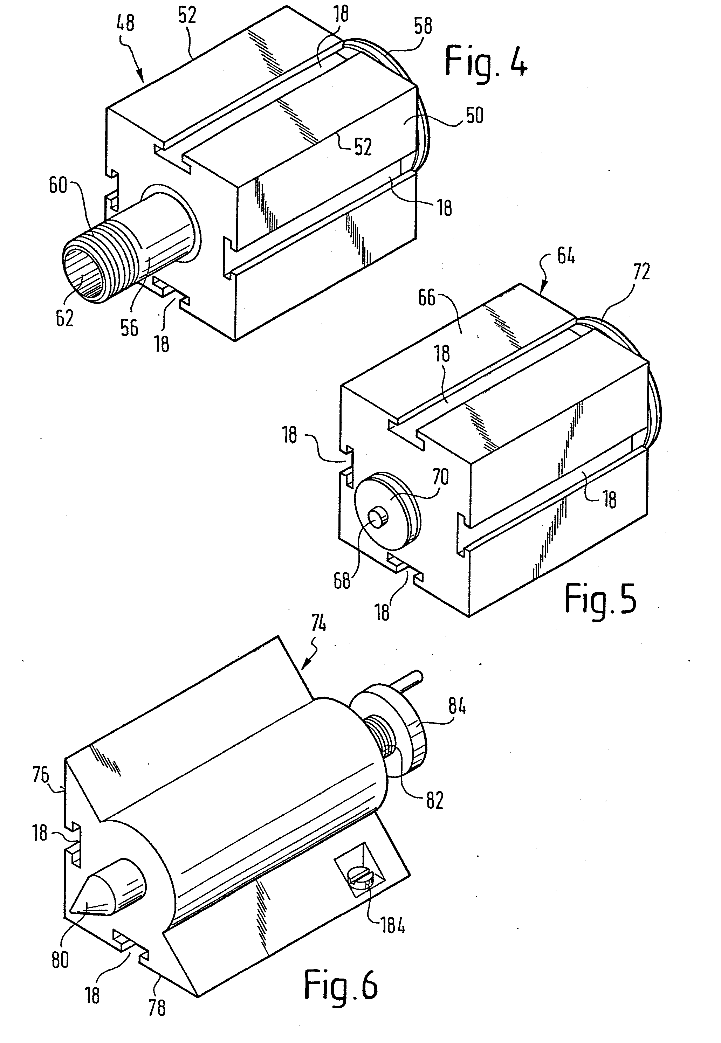

Fig. 4 zeigt einen Spindelstock 48 mit einem blockförmigen Gehäuse 50, das in seiner äußeren Gestalt in der gleichen Weise wie das Motorgehäuse 34 ausgebildet ist und die gleichen Abmessungen wie dieses besitzt mit der Ausnahme, daß die parallel zu den KLemmnuten 18 verlaufenden Längskanten 52 nicht die gleiche Länge wie die entsprechenden Kanten 54 des Motorgehäuses 34 zu haben brauchen. In dem blockförmigen Gehäuse 50 ist eine Hohlspindel 56 mit parallel zu den Klemmnuten 18 gerichteter Spindelachse frei dehbar gelagert. An dem in der Fig. 4 aus dem Gehäuseblock 50 herausragenden rechten Ende der Spindel 56 ist eine Riemen- oder Schnurscheibe 58 befestigt, über welche die Spindel 56 beispielsweise von dem Motor 36 her antreibbar ist. Das in der Fig. 4 aus dem Gehäuseblock 50 herausragende linke Ende der Spindel 56 ist mit einem Außengewinde 60 versehen, auf das beispielsweise ein Bohrfutter oder ein Spannfutter aufschraubbar ist. Gegebenenfalls wird das Bohrfutter oder Spannfutter auch nur mit einer Klemmschraube auf der Spindel 56 befestigt. Die Spindel 56 weist eine axiale durchgehende Bohrung 62 auf, deren Zweck später noch erläutert wird. Die Spindel 56 kann in nicht dargestellter Weise auch mit einer Handkurbel gekoppelt werden, so daß sie von Hand drehbar ist.

Fig. 5 zeigt einen Getriebeblock oder ein Vorgelege 64 mit einem blockförmigen Gehäuse 66, das in seiner äußeren Gestalt wiederum dem Gehäuseblock 50 des Spindelstockes 48 entspricht. Das blockförmige Gehäuse 66 kann ein mehrere Übersetzungsstufen umfassendes Getriebe aufweisen. Im einfachsten Falle ist jedoch in dem Gehäuse 66 eine Welle 68 mit parallel zu den Klemmnuten 18 verlaufender Achse frei drehbar gelagert, wobei die Welle 68 an ihren aus dem Gehäuseblock 66 herausragenden Enden Riemen- oder Schnurscheiben 70 bzw. 72 unterschiedlichen Durchmessers trägt. Dabei können auch an jedem Wellenende mehrere Riemenscheiben unterschiedlichen Durchmessers koaxial zueinander angeordnet sein, so daß sich verschiedene Übersetzungsverhältnisse einstellen lassen. Dieser Getriebeblock oder dieses Vorgelege 64 kann zwischen den Motor 36 und den Spindelstock 48 eingeschaltet werden, um eine gewünschte Drehzahl der Spindel bei gleichleibender Motordrehzahl zu erreichen. Wenn die Spindel 56 des Spindelstockes 48 mit zwei Riemen- oder Schnurscheiben unterschiedlichen Durchmessers versehen wird, kann der Spindelstock auch als Getriebeblock verwendet werden, so daß ein eigener Getriebeblock entfällt.

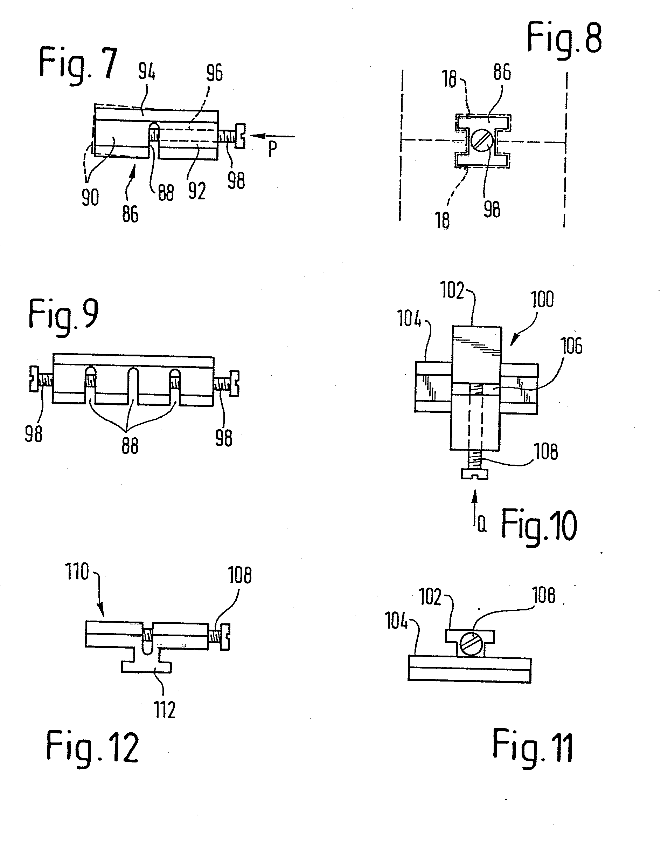

Fig. 6 zeigt einen ganz allgemein mit 74 bezeichneten Reitstock, der im dargestellten Ausführungsbeispiel einen im wesentlichen dreieckigen Querschnitt besitzt. Das heißt der Reitstock 74 weist nur zwei zueinander senkrechte Anlageflächen 76 bzw. 78 auf, in denen jeweils eine Klemmnut 18 mit T-förmigem Querschnitt ausgebildet ist. Die parallel zu den Flächen 76 und 78 gerichtete Spindel 80 des Reitstockes weist einen Gewindeabschnitt 82 auf, mit dem sie in ein Innengewinde des Reitstockes 74 einschraubbar ist, so daß die Spindel 80 mit Hilfe eines Handrades 84 in axialer Richtung verstellbar ist.

Die Figuren 7 und 8 zeigen ein erstes Verbindungselement 86, mit dessen Hilfe die vorstehend beschriebenen Teile 10, 22, 32, 48, 64 und 74 fest miteinander verbunden werden können. Das Verbindungselement 86 besteht aus einem Kunststoffteil mit einem Doppel-T-Profil, dessen Profilquerschnitt dem Querschnitt zweier mit ihren Öffnungen aneinander gelegter, parallel zueinander gerichteter Klemmnuten 18 entspricht, wie dies in Fig. 8 für zwei beliebige der anhand der Fig. 1 bis 6 beschriebenen Teile durch gestrichelte Linien angedeutet ist.

Das Verbindungselement 86 weist quer zu seiner Profillängsrichtung eine Kerbe oder Nut 88 auf, so daß zwei Abschnitte 90 und 92 gebildet werden, die nur über eine Materialbrücke 94 zusammenhängen, die Teil eines der T-Querstege ist. Wegen der begrenzten Elastizität des für die Herstellung des Verbindungselementes 86 verwendeten Materials ist die verbliebene Materialbrücke 94 biegsam, so daß die beiden Abschnitte 90 und 92 um eine senkrecht zur Zeichenebene der Fig. 7 verlaufende Achse gegeneinander verschwenkbar sind.

In dem Abschnitt 92 ist eine parallel zur Profillängsrichtung verlaufende durchgehende Gewindebohrung 96 ausgebildet, in welche eine Schraube 98
einschraubbar ist. Wird die Schraube 98 soweit in
die Gewindebohrung eingeschraubt, daß sie mit ihrem
freien Ende gegen den Abschnitt 90 drückt, so führt
ein weiteres Einschrauben der Schraube 98 dazu, daß
der Abschnitt 90 von dem Abschnitt 92 weggedrückt
und damit um die senkrecht zur Zeichenebene der
Fig. 7 verlaufende Achse verschwenkt wird, wie dies
in der Fig. 7 durch gestrichelte Linien angedeutet
ist. Wird nun das Verbindungselement 86 gleichzeitig
in zwei einander zugekehrte Klemmnuten zweier miteinander zu verbindender Teile eingeschoben, wie dies
in Fig. 8 dargestellt ist, so können die beiden Teile nicht mehr voneinander abgehoben, aber zunächst
noch parallel zur Nutlängsrichtung gegeneinander verschoben werden. Wird die Schraube 98 in der eben beschriebenen Weise angezogen, so wird durch die Auslenkung des Abschnittes 90 das Verbindungselement 86
in den beiden einander zugewandten Klemmnuten 18 verkeilt, wobei die beiden miteinander zu verbindenden
Teile fest gegeneinander gespannt werden. Die Verbindung kann durch Lockern der Schraube 98 jederzeit
wieder gelöst werden. Dabei ist zu bemerken, daß das
Verbindungselement 86 nicht an einer bestimmten Stelle in Längsrichtung der Klemmnuten sitzen muß. Die
Schraube 98 ist jederzeit für einen in Längsrichtung
der Klemmnuten 18 in diese eingeführten Schraubendreher erreichbar.

Fig. 9 zeigt eine abgewandelte Ausführungsform des in
den Fig. 7 und 8 dargestellten Verbindungselementes.

Anstelle einer Nut 88 sind drei derartige Nuten vorgesehen, so daß das Verbindungselement anstelle zweier Abschnitte 90 und 92 vier derartige Abschnitte aufweist. Anstelle einer einzigen als Spannelement dienenden Schraube 98 sind zwei derartige Schrauben vorgesehen, die von entgegengesetzten Seiten her betätigbar sind. Die Funktionsweise des Verbindungselementes ist die gleiche wie bei dem Verbindungselement 86.

Während bei den Verbindungselementen gemäß den Fig. 7 bis 9 die Klemmnuten der miteinander zu verbindenden Bausatzteile parallel zueinander verlaufen müssen, zeigen die Fig. 10 und 11 ein Verbindungselement 100, bei dem die Klemmnuten der miteinander zu verbindenden Teile senkrecht zueinander gerichtet sein können. Die in die jeweilige Klemmnut 18 einführbaren Einzelprofile 102 bzw. 104 sind mit ihren Profillängsrichtungen senkrecht zueinander angeordnet. In dem in den Fig. 10 und 11 oberen Einzelprofil 102 ist wie bei den Verbindungselementen gemäß den Fig. 7 bis 9 eine Quernut oder Kerbe 106 ausgebildet, so daß die dadurch gebildeten Abschnitte des Einzelprofiles 102 mittels einer in den einen Abschnitt eingeschraubten Schraube 108 auseinandergespreizt werden können. Da beim Einschrauben der Schraube 108 nicht nur die beiden Abschnitte des Einzelprofiles 102 auseinander gebogen, sondern dabei auch das untere Einzelprofil 104 nach oben gezogen wird, werden auch bei diesem Verbindungselement 100 durch das Einschrauben der Schraube 108 die miteinander zu verbindenden Bausatzteile fest gegeneinander gespannt.

Das in der Fig. 12 dargestellte Verbindungselement 110 stimmt in seinem die Schraube 108 aufweisenden Einzelprofil mit dem in den Figuren 10 und 11 dargestellten Verbindungselement 100 überein. Das zweite Einzelprofil dagegen besteht aus einem kreisrunden T-Profil Fuß 112, der in der jeweiligen Klemmnut 18 beliebig um eine zum Nutgrund senkrechte Achse gedreht werden kann. Dadurch ist es möglich, zwei Bausatzteile so miteinander zu verbinden, daß ihre einander zugekehrten Klemmnuten einen beliebigen Winkel miteinander einschließen.

Anstelle einer die Abschnitte der Verbindungselemente spreizenden Schraube könnte auch eine Schraube verwendet werden, die sämtliche Abschnitte des Verbindungselementes durchsetzt und mit ihrem freien Ende in eine Mutter greift, so daß beim Anziehen der Schraube die Abschnitte des Verbindungselementes zusammengedrückt und dadurch verkantet werden. Auch ist es denkbar, ein Verbindungselement zu verwenden, daß zwischen dem Schraubenkopf und einer Schraubenmutter zusammendrückbar ist, wobei sich seine Querschnittsfläche reversibel vergrößert, so daß es sich in der Klemmnut verklemmt. Allen Verbindungselementen ist jedoch gemeinsam, daß sie an einer beliebigen Stelle der jeweiligen Klemmnut festklemmbar sind und in Längsrichtung der Klemmnut betätigt werden können.

Die Fig. 13 bis 15 zeigen eine erste Schlittenanordnung, die mit den vorstehend beschriebenen Teilen des Bausatzes kombinierbar ist und beispielsweise zur präzisen Relativverstellung zwischen Werkstück und Werkzeug verwendet werden kann. Die allgemein mit 114 bezeichnete erste Schlittenanordnung umfaßt einen Schlittenträger 116 und einen Schlitten 118, der auf dem Schlittenträger 116 mittels einer Schwalbenschwanzführung 120 (Fig. 15) verschiebbar geführt ist. Die Verstellung des Schlittens 118 an dem Schlittenträger 116 erfolgt mit Hilfe einer Stellspindel 122, die in einer auf der Oberseite des Schlittenträgers 116 ausgebildeten Nut 124 frei drehbar gelagert und mittels eines Handrades 126 drehbar ist und die in ein mit dem Schlitten 118 verbundenes Auge 128 eingreift, das mit einer Gewindebohrung versehen ist (Fig. 15).

Die Schlittenanordnung 114 besitzt - in einem Querschnitt senkrecht zur Stellspindel 122 betrachtet - annähernd dieselben Querschnittabmessungen wie das Trägerelement 10. Die Schlittenanordnung ist lediglich geringfügig höher als die Querschnittskantenlänge des Trägerelementes, so daß ein auf dem Schlitten montiertes Teil nicht an dem Trägerelement schleift, wenn der Schlittenträger unmittelbar am Trägerelement befestigt ist. In den parallel zur Stellspindel 122 verlaufenden Außenflächen des Schlittenträgers 116 sind wiederum parallel zur Stellspindel 122 gerichtete Klemmnuten 18 ausgebildet, die in der Mitte zwischen zwei Längskanten des Schlittenträgers 116 bzw. des Schlittens 118 verlaufen. Wird also beispielsweise die Schlittenanordnung 114 auf eine ebene Unterlage flach neben ein Trägerelement 10 gelegt, so kann der Schlittenträger 116 mit dem Trägerelement mittels eines Verbindungselementes 86 oder 110 verbunden werden. In der Oberseite des Schlittens 118 ist gemäß Fig. 14 noch eine weitere Klemmnut 18 ausgebildet, die senkrecht zur Stellspindel 122 gerichtet ist. Ferner ist in dem Schlitten 118 senkrecht zu dessen Oberfläche und nahe einer Ecke derselben eine Gewindebohrung 130 vorgesehen, die beispielsweise zum Einspannen eines Drehstahles zwischen dem Schlitten 118 und einer Spannpratze dienen kann, wie dies später noch gezeigt wird.

Die Fig. 16 und 17 zeigen eine allgemein mit 132 bezeichnete zweite Schlittenanordnung mit einem plattenförmigen Schlittenträger 134, an dem mittels einer Schwalbenschwanzführung 136 ein Schlitten 138 verschiebbar geführt ist. Die Verstellung des Schlittens 138 an dem Schlittenträger 136 erfolgt mittels einer Stellspindel 140, die in eine Gewindebohrung 142 in dem Schlittenträger 134 einschraubbar ist und an ihrem freien Ende ein Handrad 144 trägt. Das Handrad 144 ist in einem mit dem Schlitten 138 verbundenen Auge 146 frei drehbar gelagert und mittels einer Klemmschraube 148 drehfest mit der Stellspindel 140 verbindbar. Durch Lösen der Klemmschraube 148 kann die Verbindung zwischen der Stellspindel und dem Handrad gelöst werden, so daß der Schlitten 138 gegenüber dem Schlittenträger 134 frei verschiebbar ist. Ein Verstellen des Schlittens 138 kann dann beispielsweise mit Hilfe eines Stellhebels erfolgen, wie dies später anhand eines Ausführungsbeispiels noch erläutert wird.

Auf der Oberseite des Schlittens 118 sind wiederum zwei senkrecht zueinander gerichtete Klemmnuten 18 ausgebildet, wie die in der Fig. 14 für den Schlitten 118 dargestellt ist.

Der Schlittenträger 134 wird nicht mit Hilfe eines Verbindungselementes 86 an den übrigen Teilen des Bausatzes befestigt, sondern weist zu diesem Zweck an seiner Unterseite einen T-Nutenstein 150 auf, der mit Hilfe einer in der Fig. 16 gestrichelt dargestellten Schraube 152 in einer Klemmnut 18 festgeklemmt werden kann. Die Schraube 152 durchsetzt den Schlittenträger 134 und ist nach dem Verschieben des Schlittens 138 von der Oberseite des Schlittenträgers 134 her zugänglich. Diese Art der Befestigung bei der Schlittenanordnung 100 hat den Vorteil, daß diese Schlittenanordnung um die Achse der Schraube 152 in beliebiger Weise gedreht werden kann, so daß auch Stellungen der Schlittenanordnung schräg zur Klemmnut 18 möglich sind, in welcher der Nutenstein 150 sitzt.

Anhand der Fig. 18 bis 24 sollen nun Ausführungsvarianten von Werkzeugmaschinen erläutert werden, die im wesentlichen unter Verwendung der vorstehend beschriebenen Elemente des erfindungsgemäßen Bausatzes zusammengebaut wurden. Dabei stellen diese Ausführungsvarianten nur einige der Werkzeugmaschinen dar, die mit den Elementen des Bausatzes aufgebaut werden können.

Fig. 18 zeigt eine Seitenansicht einer Ständerbohrmaschine. Ein senkrecht gestelltes langes Trägerelement 10, das über ein Zwischenteil 22 mit dem Schlittenträger 116 einer ersten Schlittenanordnung 114 verbunden ist, dient als Ständer, an dessen oberem Ende eine zweite Schlittenanordnung 132 ebenfalls über ein Zwischenteil 22 angeordnet ist. An der zweiten Schlittenanordnung 132 wurde die Stellspindel in der oben beschriebenen Weise außer Funktion gesetzt, so daß der Schlitten 138 an dem Schlittenträger 134 frei verschiebbar ist. Die Verstellung des Schlittens 138 erfolgt über einen Stellhebel 154, der mit einem ersten Zapfen 156 in eine seitliche Bohrung 158 in dem Schlitten 138 (s. Fig. 16) und mit einem zweiten Zapfen 160 in das Langloch 28 in dem Zwischenteil 22 eingreift. Durch ein Verschwenken des Stellhebels in Richtung des Doppelpfeiles D kann der Schlitten 138 auf und ab verschoben werden. Der Schlitten 138 trägt einen Spindelstock 48, an dem der Antriebsmotor 32 befestigt ist, der in der Fig. 18 hinter dem Spindelstock 48 liegt. Die Spindel 56 trägt an ihrem freien Ende ein Bohrfutter 162, in dem ein Bohrer 164 eingespannt ist.

Auf dem Schlitten 118 der ersten Schlittenanordnung ist mit Hilfe eines Nutensteines 166 ein Bohrtisch 168 befestigt.

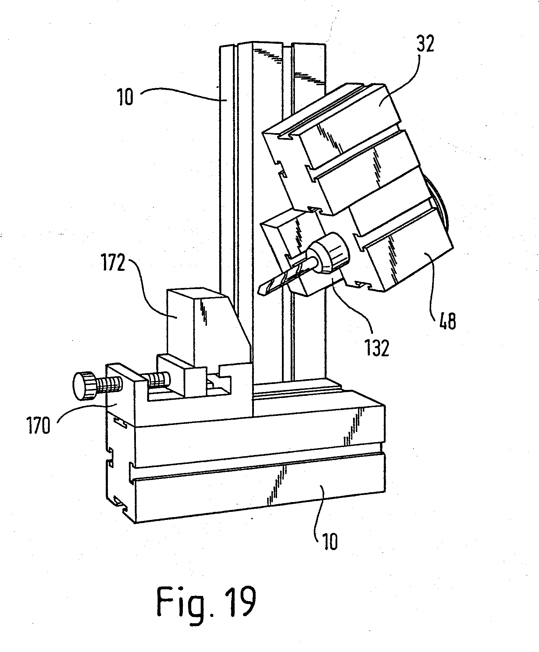

Fig. 19 zeigt in einer perspektivischen Anordnung wiederum eine Ständerbohrmaschine, bei welcher jedoch die erste Schlittenanordnung durch ein kurzes Trägerelement 10 ersetzt wurde. Anstelle des Bohrtisches ist ein Werkstückhalter oder Schraubstock 170

auf der Oberseite des liegenden Trägerelementes 10 befestigt, in dem ein Werkstück 172 eingespannt ist. Die zweite Schlittenanordnung 132 wurde gegenüber dem vertikalen Trägerelement 10 so gedreht, daß nun auch schräg zur Bohrtischoberfläche gebohrt werden kann, wenn dies an dem mit Schrägflächen versehenen Werkstück 172 erforderlich sein sollte.

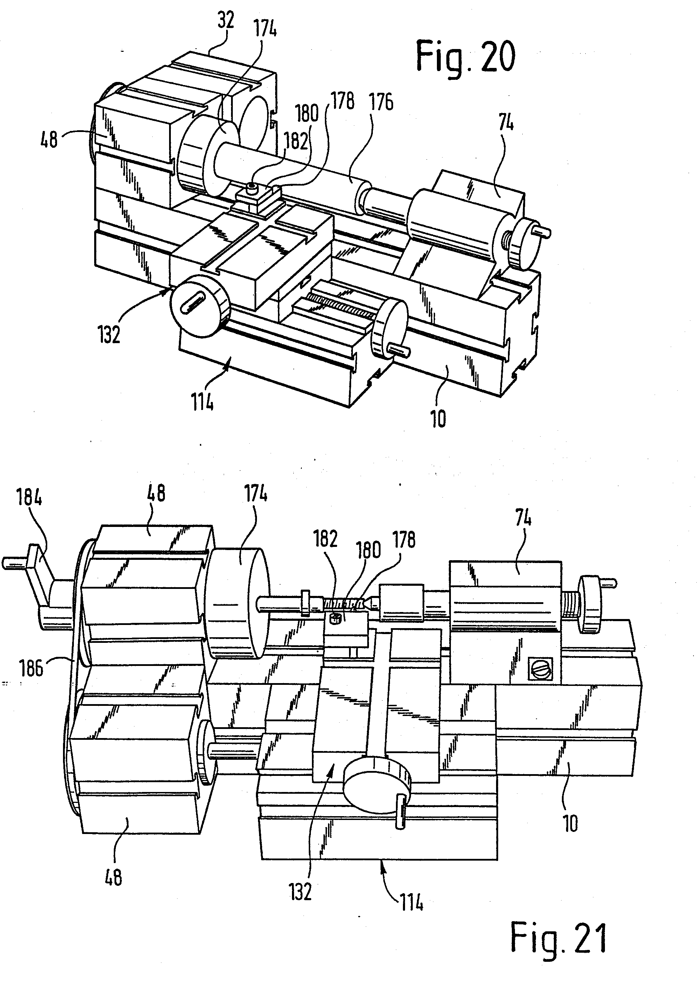

Fig. 20 zeigt eine kleine Drehbank. Ein langes Trägerelement 10, das horizontal auf einer Unterlage aufliegt, dient als Maschinenbett. Es trägt an seinem einen Ende einen Spindelstock 48, der mit dem Motorblock 32 verbunden ist und dessen Spindel ein Spannfutter 174 trägt. Am anderen Ende des Trägerelementes 10 ist ein Reitstock 74 aufgesetzt. Zwischen dem Spannfutter 174 und dem Reitstock 74 ist das zu bearbeitende Werkstück 176 eingespannt. An der Vorderseite des Trägerelementes 10 und parallel zu diesem ist der Schlittenträger 116 einer ersten Schlittenanordnung 114 befestigt, auf deren Schlitten 118 eine zweite Schlittenanordnung 132 so befestigt ist, daß ihr Schlitten 138 senkrecht zur Verstellrichtung des ersten Schlittens 118 verstellbar ist. Auf dem zweiten Schlitten 138 ist ein Drehstahl 178 mit Hilfe einer Spannpratze 180 festgeklemmt, die mit einer in die Gewindebohrung 130 einschraubbaren Schraube 182 festspannbar ist. Reicht der Verstellweg der jeweiligen Schlitten mit Hilfe der Spindeltriebe nicht mehr aus, so wird der jeweilige Schlittenträger entsprechend verstellt. Ein wichtiges Merkmal des erfindungsgemäßen Bausatzes liegt darin, daß die Führungen für die Schlitten nicht an dem Maschischinenbett sondern an eigenen Schlittenträgern angeordnet sind, so daß das Maschinenbett vielseitiger verwendbar ist und die Schlittenanordnungen als selbständige Einheiten in vielfältiger Weise eingesetzt werden können. Um die Achse, um welche das Werkstück rotiert, parallel zum Verschiebeweg des ersten Schlittens 118 auszurichten, kann der Reitstock durch eine sich auf der Oberfläche des Trägerelementes 10 abstützende Schraube 184 (Fig. 6) geringfügig gegenüber der Oberfläche des Trägerelementes 10 gekippt werden, so daß ein seitlicher Versatz der Werkstückachse erreicht wird.

Um eine Vorstellung von der Größenordnung der in der Fig. 20 dargestellten Maschine zu geben, sollen im folgenden einige Maße angegeben werden. Das Trägerelement 10 besitzt eine Querschnittkantenlänge von 50 mm. Mit der dargestellten Drehmaschine lassen sich Werkstücke mit einer Drehlänge von 170 mm und einem maximalen Druchmesser von 50 mm bearbeiten. Die Spindelbohrung beträgt 8 mm. Der Längsweg ohne Verrücken des Schlittenträgers beträgt 50 mm und der Querweg 25 mm.

Fig. 21 zeigt eine spezielle Ausführung der in der Fig. 20 dargestellten Drehbank zum Schneiden von Gewinden.

Der Antriebesmotor ist entfallen. Die Spindel des Spindelstockes 48 ist an ihrem rückwärtigen Ende mit einer Kurbel 185 versehen. An dem Trägerelement 10 ist in Flucht mit der ersten Schlittenanordnung oder Längsschlittenanordnung 114 ein zweiter Spindelstock 48 angeordnet, dessen Spindel 56 mit der Stellspindel 122 der ersten Schlittenanordnung 114 drehfest gekoppelt ist. Die Spindel dieses zweiten Spindelstockes 48 wird von der Spindel des ersten Spindelstockes 48 über einen Riemen 186 in einem bestimmten Übersetzungsverhältnis angetrieben, wobei dieses Übersetzungsverhältnis das Verhältnis von Drehzahl des Werkstückes zu Vorschub des Werkzeuges in Achsrichtung des Werkstückes bestimmt. Da die Drehzahl durch den Handantrieb beliebig gewählt werden kann, ist das Gewindeschneiden auch für Ungeübte möglich.

Zum Drehen von durchmessergrößeren Teilen genügt es, den Reitstock und den das Spannfutter tragenden Spindelstock beispielsweise jeweils auf ein Zwischenteil zu setzen, so daß der Abstand der Drehachse von dem Maschinenbett bzw. dem Trägerelement 10 entsprechend größer wird. Dadurch lassen sich ohne weiteres Werkstücke bis zu einem Durchmesser von 100 mm drehen.

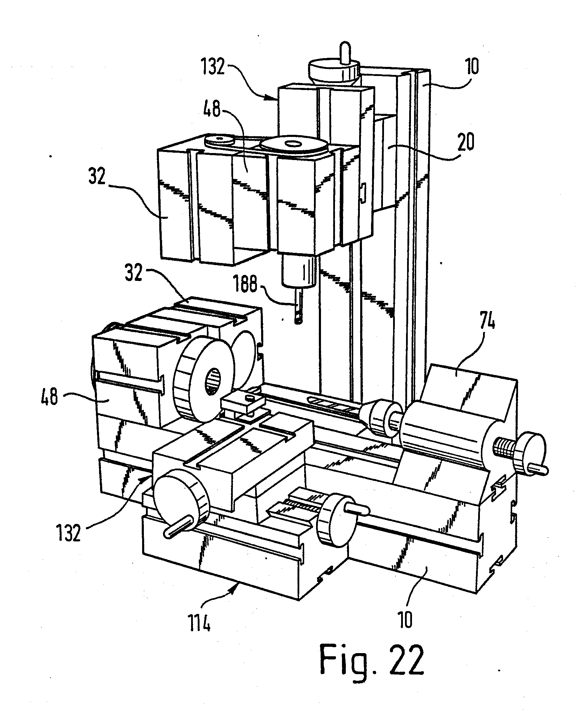

Fig. 22 zeigt eine für Drehen, Bohren und Fräsen geeignete Kombinationsmaschine. Im Vordergrund ist eine Drehmaschine aufgebaut, wie sie in der Fig. 20 dargestellt ist. Lediglich die Spindel des Reitstockes ist mit einem Bohrfutter versehen. An der Drehmaschine ist unter Zwischenschaltung eines kurzen horizontal gelegten Trägerelementes 10 ein vertikales Trägerelement 10 als Ständer befestigt, das über ein Zwischenteil 20 eine zweite Schlittenanordnung 132 trägt. Deren Schlitten 138 trägt eine Spindelstock-Antriebsmotor-Kombination, wobei an der Spindel 56 des Spindelstockes 48 ein Fräser 188 angeordnet ist.

Fig. 26 zeigt eine Waagerecht-Fräsmaschine mit Teilapparat zum Verzahnen mit einem Schlagzahnformfräser. Ein längeres horizontales Trägerelement 10
ist mit einem kürzeren veritkalen Trägerelement 10
verbunden. An dem horizontalen Trägerelement 10 ist
eine aus einem Längsschlitten 114 und einem Querschlitten 132 bestehende Schlittenkombination befestigt, wobei der Schlitten 138 der zweiten Schlittenanordnung 132 einen Teilapparat 190 mit einem zu
bearbeitenden Zahnrad 192 trägt. An dem vertikalen
Trägerelement 10 ist eine zweite Schlittenanordnung
132 angeordnet, deren Schlitten 138 eine Spindelstock-Antriebsmotor-Kombination trägt. Die Spindel
56 ist mit einem Schlagzahnformfräser 194 verbunden.

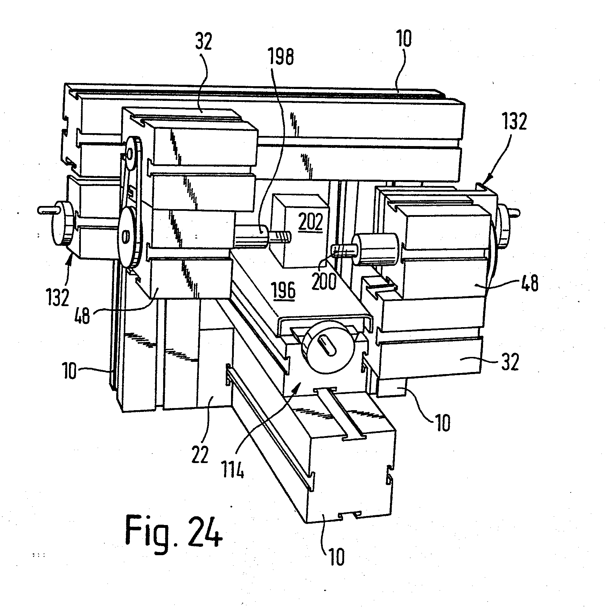

Fig. 24 schließlich zeigt als Beispiel einer komplexeren Werkzeugmaschine eine Portalfräsmaschine
zum gleichzeitigen Fräsen von Werkstücken mit zwei
Spindeln. Das Portal besteht aus zwei vertikalen
kürzeren Trägerelementen und einem horizontalen
oberen Trägerelement 10, welches die beiden vertikalen Trägerelemente miteinander verbindet. Zu diesem Zweck sind in den Stirnflächen der kurzen Trägerelemente Gewindebohrungen ausgebildet, so daß die
Trägerelemente direkt zu einem Portal miteinander
verschraubt werden können. Zwischen den unteren Enden der vertikalen Trägerelemente liegt ein längeres
Trägerelement 10 senkrecht zu der durch das Portal
gebildeten Ebene, wobei die Verbindungen zwischen diesem Trägerelement und den vertikalen Trägerelementen über zwei Zwischenteile 22 erfolgt. Das auf der Unterlage aufliegende Trägerelement 10 trägt eine Schlittenanordnung 114, deren Schlitten 118 einen langen Werkstückauflagetisch 196 trägt.

An den vertikalen Trägerelementen 10 ist jeweils eine zweite Schlittenanordnung 132 so angeordnet, daß der Schlitten 138 in Richtung auf die Portalmitte zu bewegbar ist. Der jeweilige Schlitten 138 trägt eine Spindelstock-Antriebsmotor-Kombination. Die Spindel ist jeweils mit einem Fräser 198 bzw. 200 verbindbar, so daß das Werkstück 202 von beiden Seiten her bearbeitbar ist. Wie man erkennt, besteht auch diese komplexe Maschine mit Ausnahme des Werkstückauflagetisches nur aus den oben beschriebenen Grundelementen des Bausatzes.

In der vorstehenden Beschreibung wurden nur einige Werkzeugmaschinen erläutert, die sich mit dem erfindungsgemäßen Bausatz aufbauen lassen. In der gleichen Weise und mit denselben Grundelementen lassen sich Schleif- und Fräsmaschinen unterschiedlicher Art erstellen, wobei lediglich gegebenenfalls mehrere gleiche Grundelemente benötigt werden. Der Zusammenbau oder Umbau der Werkzeugmaschinen kann auf einfachste Weise und rasch erfolgen. Die so erstellten Werkzeugmaschinen sind vor allem für Unterrichtszwecke, Modellbauer, Bastler und Jugendliche bestimmt und lassen sich für die Herstellung von Kleinteilen aus Holz, Kunststoff, Aluminium, Messing, Bronze und auch Stahl verwenden. Der kleine Elektromotor liefert einerseits eine ausreichende Leistung, um auch Kleinteile aus Stahl bearbeiten zu können. Andererseits ist er so schwach, daß keine besonderen Sicherheitsvorkehrungen getroffen werden müssen, um gefährliche Verletzungen eines Benutzers zu vermeiden, da der Motor jederzeit mit der Hand angehalten werden kann.

- 1 -

Patentansprüche

1. Bausatz für Kleinwerkzeugmaschinen mit mindestens einem Antriebsmotor, einem Spindelstock und einem Trägerelement zur Halterung dieser Teile, d a - d u r c h g e k e n n z e i c h n e t , daß der Antriebsmotor (32), der Spindelstock (48) und das Trägerelement (10) als selbständige Teile ausgebildet sind, daß die miteinander verbindbaren Teile des Bausatzes jeweils eine Anlagefläche aufweisen, in der mindestens eine hinterschnittene Klemmnut (18) ausgebildet ist und daß in die Klemmnuten (18) zweier miteinander zu verbindender Bausatzteile einführbare Verbindungselemente (86, 100, 110) vorgesehen sind, die mittels mindestens eines Spannelementes (98, 108) in den Klemmnuten (118) festklemmbar sind.

2. Bausatz nach Anspruch 1, d a d u r c h g e - k e n n z e i c h n e t , daß die Verbindungselemente (86, 100, 110) aus zwei miteinander verbundenen Einzelprofilen bestehen, deren Querschnitt jeweils dem Querschnitt einer Klemmnut (18) entspricht.

3. Bausatz nach Anspruch 2, d a d u r c h g e - k e n n z e i c h n e t , daß die Einzelprofile parallel zueinander gerichtet sind.

4. Bausatz nach Anspruch 2, d a d u r c h g e -
k e n n z e i c h n e t , daß die Einzelprofile
(102, 104) einen Winkel miteinander bilden.

5. Bausatz nach Anspruch 2, d a d u r c h g e -
k e n n z e i c h n e t , daß eines der Einzelprofile bezüglich einer zur Trennebene zwischen den
beiden Einzelprofilen senkrechten Achse rotationssymmetrisch ausgebildet ist.

6. Bausatz nach Anspruch 1, d a d u r c h g e -
k e n n z e i c h n e t , daß die Verbindungselemente jeweils aus einem elastischen Material bestehen und daß die Querschnittsfläche der Verbindungselemente durch das Spannelement reversibel veränderlich ist.

7. Bausatz nach einem der Ansprüche 1 bis 5, d a -
d u r c h g e k e n n z e i c h n e t , daß die
Verbindungselemente (86; 100; 110) jeweils mindestens zwei Abschnitte (90, 92) umfassen, die mittels des Spannelementes (98; 108) um eine zur Profillängsrichtung senkrechte Achse relativ zueinander verschwenkbar sind.

8. Bausatz nach Anspruch 7, d a d u r c h g e -
k e n n z e i c h n e t , daß die Verbindungselemente (86; 100; 110) einstückig aus Kunststoff
ausgebildet sind, wobei das Gelenk zwischen den beiden Abschnitten (90, 92) von einer Materialbrücke
(94) mit gegenüber den Abschnitten (90, 92) geringer
Stärke gebildet ist.

- 3 -

9. Bausatz nach einem der Ansprüche 1 bis 8 , d a -
d u r c h   g e k e n n z e i c h n e t , daß das
Spannelement von einer in Profillängsrichtung verstellbaren Schraube (98; 108) gebildet ist.

10. Bausatz nach einem der Ansprüche 1 bis 9 , d a -
d u r c h   g e k e n n z e i c h n e t , daß die
Klemmnuten (18) ein T-Profil und die Verbindungselemente (86; 100; 110) ein Doppel-T-Profil aufweisen.

11. Bausatz nach einem der Ansprüche 1 bis 10 , d a -
d u r c h   g e k e n n z e i c h n e t , daß er
einen mit dem Antriebsmotor (32) und dem Spindelstock (48) kuppelbaren Getriebeblock (64) umfaßt.

12. Bausatz nach einem der Ansprüche 1 bis 11 , d a -
d u r c h   g e k e n n z e i c h n e t , daß mindestens der Spindelstock (48), der Getriebeblock
(64) und das Trägerelement (10) eine quaderförmige
äußere Gestalt aufweisen und in den Längen mindestens zweier Quaderkanten (12) übereinstimmen, wobei die Klemmnuten (18) parallel zu den dritten
Quaderkanten (14; 46) gerichtet sind.

13. Bausatz nach Anspruch 12 , d a d u r c h   g e -
k e n n z e i c h n e t , daß die Klemmnut (18) jeweils mittig zwischen den parallel zu ihr gerichteten
Kanten (14; 46) der sie aufnehmenden Fläche (16) verläuft.

14. Bausatz nach Anspruch 12 oder 13 , d a d u r c h g e k e n n z e i c h n e t , daß die Klemmnuten (18) am Antriebsmotor (32), am Spindelstock (48) und am Getriebeblock (64) parallel zu der jeweiligen Ausgangswelle (38; 68) bzw. der Spindelachse gerichtet sind.

15. Bausatz nach einem der Ansprüche 12 bis 14 , d a - d u r c h g e k e n n z e i c h n e t , daß mindestens der Spindelstock (48), der Getriebeblock (64) und das Trägerelement (10) senkrecht zu den die Klemmnuten (18) aufweisenden Flächen einen quadratischen Querschnitt aufweisen.

16. Bausatz nach einem der Ansprüche 12 bis 15 , g e - k e n n z e i c h n e t d u r c h ein quaderförmiges Zwischenteil (22), das auf mindestens zwei einander entgegengesetzten Flächen jeweils mindestens eine Klemmnut (18) aufweist, wobei mindestens eine Klemmnut (18) der einen Fläche senkrecht zu einer Klemmnut (18) der anderen Fläche gerichtet ist.

17. Bausatz nach Anspruch 16 , d a d u r c h g e - k e n n z e i c h n e t , daß die Längen zweier Kanten des Zwischenteiles (22) gleich den Längen der senkrecht zu den Klemmnuten (18) gerichteten Kanten (12; 42) von Antriebsmotor (32), Spindelstock (48), Getriebeblock (64) und Trägerelement (10) sind.

18. Bausatz nach einem der Ansprüche 1 bis 17 , d a - d u r c h g e k e n n z e i c h n e t , daß er mindestens eine Schlittenanordnung (114) mit einem mindestens annähernd quaderförmigen Schlittenträger (116) und einem an diesem verschiebbar geführten Schitten (118) umfaßt, daß der Schlittenträger (116) an den zur Bewegungsrichtung des Schlittens parallelen Außenflächen jeweils mindestens eine parallel zur Bewegungsrichtung des Schlittens (118) gerichtete Klemmnut (18) aufweist und daß in der Oberseite des Schlittens (118) jeweils mindestens eine parallel und eine senkrecht zur Bewegungsrichtung des Schlittens (118) gerichtete Klemmnut (18) ausgebildet ist.

19. Bausatz nach Anspruch 18 , d a d u r c h g e - k e n n z e i c h n e t , daß die Gesamthöhe der Schlittenanordnung (114) geringfügig größer als eine der Querschnittkantenlängen des Trägerelementes (10) ist.

20. Bausatz nach einem der Ansprüche 1 bis 19 , d a - d u r c h g e k e n n z e i c h n e t , daß er mindestens eine weitere Schlittenanordnung (132) mit einem Schlittenträger (134) und einem an diesem verschiebbar geführten Schlitten (138) umfaßt, wobei der Schlittenträger (134) an seiner Unterseite einen in die Klemmnuten (18) einführbaren Nutenstein (150) aufweist, der mittels einer von der Schlittenträgeroberseite her zugänglichen Klemmschraube (152) festklemmbar ist, und wobei der Schlitten (138) auf seiner Oberseite jeweils mindestens eine parallel und eine senkrecht zur Bewegungsrichtung des Schlittens (138) gerichtete Klemmnut (18) aufweist.

21. Bausatz nach einem der Ansprüche 18 bis 20 , d a -
d u r c h   g e k e n n z e i c h n e t , daß die
Schlitten (118, 138) der Schlittenanordnungen (114,
132) jeweils durch einen handbetätigten Spindeltrieb (122, 140) verstellbar sind.

22. Bausatz nach Anspruch 21 , d a d u r c h   g e -
k e n n z e i c h n e t , daß der Spindeltrieb (140)
der zweiten Schlittenanordnung (132) aussetzbar und
der Schlitten (138) mittels eines Stellhebels gegenüber dem Schlittenträger (134) frei verschiebbar
ist.

23. Bausatz nach einem der Ansprüche 1 bis 22 , d a -
d u r c h   g e k e n n z e i c h n e t , daß die
Spindel (56) des Spindelstockes (48) eine durchgehende axiale Bohrung (62) aufweist.

24. Bausatz nach einem der Ansprüche 1 bis 23 , d a -
d u r c h   g e k e n n z e i c h n e t , daß der Antriebsmotor (36) von einem Gleichstrommotor geringer
Leistung gebildet ist und daß das Trägerelement (10)
eine Kammer zur Aufnahme einer Stromquelle für den
Antriebsmotor (36) aufweist.

Fig.1

Fig.2

Fig.3

Fig. 4

Fig. 5

Fig. 6

Fig. 7

Fig. 8

Fig. 9

Fig. 10

Fig. 12

Fig. 11

Fig. 13

Fig. 15

Fig. 14

Fig. 16

Fig. 17

0117973

Fig. 18

Fig. 19

Fig. 20

Fig. 21

Fig. 22

0117973

Fig. 23

Fig. 24